(19) **Europäisches Patentamt / European Patent Office / Office européen des brevets**

(11) **EP 2 566 214 B1**

(12) # EUROPEAN PATENT SPECIFICATION

(45) Date of publication and mention of the grant of the patent:
**13.11.2013 Bulletin 2013/46**

(51) Int Cl.:
***H04W 16/18*** (2009.01)

(21) Application number: **11306075.0**

(22) Date of filing: **29.08.2011**

(54) **Apparatus, method, computer program and base station transceiver for selecting users**

Vorrichtung, Verfahren, Computerprogramm und Basisstations-Sender-Empfänger zur Nutzerauswahl

Appareil, procédé, programme informatique et un émetteur/récepteur de station de base pour la sélection d'utilisateurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2013 Bulletin 2013/10**

(73) Proprietor: **Alcatel Lucent**
**75007 Paris (FR)**

(72) Inventor: **Schaepperle, Joerg**
**70435 Stuttgart (DE)**

(74) Representative: **Wetzel, Emmanuelle et al**
**Alcatel Lucent**
**Intellectual Property & Standards**
**70430 Stuttgart (DE)**

(56) References cited:
**EP-A1- 2 037 693**

- JOERG SCHAEPPERLE: "Throughput of a wireless cell using superposition based multiple-access with optimized scheduling", PERSONAL INDOOR AND MOBILE RADIO COMMUNICATIONS (PIMRC), 2010 IEEE 21ST INTERNATIONAL SYMPOSIUM ON, IEEE, PISCATAWAY, NJ, USA, 26 September 2010 (2010-09-26), pages 212-217, XP031837932, ISBN: 978-1-4244-8017-3
- SHIDONG ZHOU ET AL: "Novel techniques to improve downlink multiple access capacity for Beyond 3G", IEEE COMMUNICATIONS MAGAZINE, IEEE SERVICE CENTER, PISCATAWAY, US, vol. 43, no. 1, 1 January 2005 (2005-01-01), pages 61-69, XP011201246, ISSN: 0163-6804
- HAN Z ET AL: "Fair Multiuser Channel Allocation for OFDMA Networks Using Nash Bargaining Solutions and Coalitions", IEEE TRANSACTIONS ON COMMUNICATIONS, IEEE SERVICE CENTER, PISCATAWAY, NJ. USA, vol. 53, no. 8, 1 August 2005 (2005-08-01) , pages 1366-1376, XP011137832, ISSN: 0090-6778, DOI: 10.1109/TCOMM.2005.852826

**Description**

Embodiments of the present invention relate to mobile communications, more particularly to mobile communication networks using scheduled data transmission.

<u>Background</u>

Demands for higher data rates for mobile services are steadily increasing. At the same time, modem mobile communication systems as 3rd Generation systems (3G) and 4th Generation systems (4G) provide enhanced technologies, which enable higher spectral efficiencies and allow for higher data rates and cell capacities.

Transmission of packet switched data has become an important feature in mobile communication systems. The fact that packet switched data can be scheduled, i.e. radio resources are not assigned permanently to users, can be used to improve the spectral efficiency. That is to say, that users report on the radio channel quality they experience and the network, mostly an instance called scheduler in a base station transceiver, assigns radio resources to users with better channel qualities taking advantage of quick assignment mechanisms and enabling spectral efficiency improvements. These gains are possible as long as the scheduling process and the radio resources, especially the time frame for transmission, are fast enough to not influence the service quality significantly. In other words, for delay critical services as voice services or streaming services, the gain in spectral efficiency may not be as high as for delay tolerant services.

Document EP 2 037 693 discloses base station in a mobile communications system which uses a single-carrier technique for uplink and which includes a classifying unit which classifies, for each of multiple user apparatuses according to a path loss between the respective user apparatus and the base station, the multiple user apparatuses into two or more groups; and a scheduler which plans allocating of uplink resources to the user apparatuses. Uplink signals of each user apparatus that have multiple frequency components lined up in equal frequency intervals are multiplexed using a distributed frequency division multiplexing technique such that they are made mutually orthogonal on a frequency axis, the scheduler plans the resource allocating such that the user apparatuses belonging to different groups utilize different group bands or different time slots, and the group bands are specified by dividing a system band into groups.

J. Schaepperle discloses in "Throughput of a wireless cell using superposition based multiple-access with optimized scheduling ", Personal Indoor and Mobile Radio Communications (PIMRC), 2010, IEEE 21st International Symposium on, IEEE, Piscataway, NJ/USA, a performance study of a superposition based approach for multi-user access in the uplink of a wireless cell. The approach uses non-orthogonal signaling and multi-user detection on top of an orthogonal multiple-access method like OFDMA. Path losses depending on the distance between a terminal and the base station and cancellation errors during multi-user detection are taken into account. An optimized scheduling method is proposed and used for the capacity based throughput study. From the results recommendations for practical scheduling are derived. As a result, significant average throughput enhancements as well as improved cell-edge user throughput can be achieved compared to orthogonal multi-user access without increasing the number of antennas. The method can be realized as an extension of existing wireless standards like 3GPP LTE/LTE-Advanced or IEEE 802.16e/m / WiMAX.

Shidong Zhou et al, disclose in "Novel techniques to improve downlink multiple access capacity for Beyond 3G", IEEE Communications Magazine, IEEE Service Center, Piscataway US, vol. 43, no. 1, January 2005, that in future public mobile access with high data rates, one of the main challenges to be faced is spectral efficiency. The authors focus on the following new spectrally efficient downlink multiple access techniques that may be essential parts of China's Beyond 3G system development: dynamic code-division multiplexing, an adaptive multi-input multi-output technique in distributed wireless communications systems, and interleaver pattern division multi-access.

Han Z. et al, disclose in "Fair Multiuser Channel Allocation for OFDMA Networks Using Nash Bargaining Solutions and Coalitions", IEEE TRANSACTIONS ON COMMUNICATIONS, VOL. 53, NO. 8, AUGUST 2005, a fair scheme to allocate subcarrier, rate, and power for multiuser orthogonal frequency-division multiple-access systems. The problem is to maximize the overall system rate, under each user's maximal power and minimal rate constraints, while considering the fairness among users. The approach considers a new fairness criterion, which is a generalized proportional fairness based on Nash bargaining solutions and coalitions. First, a two-user algorithm is developed to bargain subcarrier usage between two users. Then a multiuser bargaining algorithm is developed based on optimal coalition pairs among users. The simulation results show that the proposed algorithms not only provide fair resource allocation among users, but also have a comparable overall system rate with the scheme maximizing the total rate without considering fairness. They also have much higher rates than that of the scheme with max-min fairness.

<u>Summary</u>

Embodiments are based on the finding that a spectral efficiency of a radio system can be further improved by sharing a radio resource between multiple users. For example, in a given wireless radio system with a frame structure and a number of independent (e.g. mutually orthogonal) radio resources and a number of users can be scheduled in each frame. Such radio resources can for example correspond to time resources, in terms of time slots in a frame structure, frequency resources in terms of sub-bands, code resources in terms of channelization or scrambling codes, etc. Each of the radio resources can be used by multiple users at a time, e.g. by using multiple antennas and/or different spatial signatures, beamforming, spatial interference cancellation, spatial division multiple access, spatial multiplexing etc. Other concepts can use non-orthogonal superposition and/or multi-user detection.

Embodiments are further based on the finding that the spectral efficiency of a mobile communication system may even be further improved when selecting certain combinations of users sharing the same resource. In other words, embodiments are based on the finding that the spectral efficiency even further depends on the combination of the particular users, which share a radio resource. The improvement of the spectral efficiency may depend on which particular user is co-scheduled with which other user, i.e. which particular user shares the same radio resource with which other user. It is a further finding that radio resources can be shared between users in the uplink and in the downlink. The following description refers to both directions.

Embodiments provide an apparatus for selecting users from a group of users to be assigned to radio resources from a set of radio resources. A radio resource is used for communicating packet switched data between users and a mobile communication system. The set of radio resources may, for example, correspond to one of or a combination of time resources, as time frames or time slots, a frequency resource, as frequency sub-carriers or sub-bands, a code resource, as channelization or scrambling codes, etc. The terms mobile communication network and mobile communication system will be used synonymously. The mobile communication system may, for example, correspond to one of the mobile communication networks standardized by the 3rd Generation Partnership Project (3GPP), as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., or mobile communication networks with different standards, e.g. Worldwide Interoperability for Microwave Access (WIMAX). Moreover, in the following the terms user, User Equipment (UE) and mobile transceiver will be used synonymously, these terms refer to a transceiver which is adapted to exchange data with a mobile communication network.

The apparatus for selecting users from a group of users comprises means for grouping a plurality of subgroups of users from the group of users. In other words, the group of users can, for example, refer to a group of mobile transceivers, which are assigned to or associated with a base station transceiver, which belongs to the mobile communication network. According to the above, some of these mobile transceivers may share the same radio resource, e.g. they may use the same Time Transmission Interval (TTI), the same sub-band and/or the same code. The means for grouping is adapted to form subgroups of mobile transceivers for radio resource sharing, e.g., one user of each subgroup can be selected for radio resource sharing.

The apparatus for selecting further comprises means for forming a plurality of assignment sets. An assignment set comprises one radio resource from the set of radio resources and one user from each of the plurality of subgroups. The plurality of assignment sets comprises one assignment set for each combination of a radio resource from the set of radio resources with one user from each of the subgroups. In other words, an assignment set corresponds to a combination of a radio resource with a number of users, where the number of users corresponds to the number of subgroups. Any combination of any one user from any subgroup with any one user from the other subgroups is combined with any radio resource from the set of radio resources.

Furthermore, the apparatus comprises means for determining a quality measure for each of the assignment sets. The quality measure of an assignment set comprises information on a communication quality achieved when jointly using the radio resource of the assignment set for communicating packet switched data between the users of the assignment set and the mobile communication system. In other words, for each assignment set a quality measure is determined. The quality measure can indicate a communication quality that is achieved when the users of said assignment set communicate with the mobile communication system using and sharing the radio resource, which is part of the assignment set. Such a quality measure may consider the mutual interference the users of the assignment set generate among each other when sharing the radio resource. For example, the quality measure may be determined in terms of one of or a combination of a Signal-to-Noise Ratio (SNR), a Signal-to-Interference Ratio (SIR), a Signal-to-Interference-and-Noise Ratio (SINR), a pathloss, a received signal strength, a data rate, etc. of the users in an assignment set, when sharing the radio resource of the assignment set. Hence, the quality measure may combine individual communication quality information of the users in the assignment set to an overall quality measure for the assignment set. Hence, the quality measure may provide an indication of the efficiency achieved by an assignment set, i.e. the efficiency achieved, when sharing the radio resource of the assignment set between the users of the assignment set. In embodiments, the quality measure can correspond to a cumulated data rate achieved by the users of an assignment set, when jointly using the radio resource of the assignment set.

The apparatus for selecting further comprises means for selecting a subset of assignment sets from the plurality of assignments sets based on the quality measures, the subset of assignment sets comprising one assignment set for each radio resource from the set of radio resources. In other words, finally one assignment set per radio resource from the set of radio resources is selected, i.e. all radio resources are assigned to one combination of users. These assignments sets are also referred to as subset of assignment sets. The subset of assignment sets is then used for actual packet switched data transmission between the mobile communication network and the users of the subset of assignment sets. The subset of assignment sets is selected based on the quality measures of the assignment sets. In some embodiments a combination of assignment sets can be selected, which delivers the best overall quality or system efficiency or highest data rate. In embodiments, the subset of assignment sets may be selected such that a cumulated quality measure of the subset is optimized with respect to any other possible combination of the subset.

In other words, for any radio resource as many assignment sets and quality measures can be available as there are combinations of users between the subgroups of users. From these assignment sets one is selected for the subset of assignment sets. In some embodiments, the assignment set with the best quality measure may be selected. In some embodiments cumulated quality measures may be determined for any combination of subsets. In other words, when an assignment set is selected for the subset, then that combination of users can be ruled out to be selected for any other radio resource. Therefore, the means for selecting may not only take into account the quality measures of the assignment sets for each individual radio resource, but also an overall quality measure for all assignment sets in the subset. Therefore in embodiments, a joint optimization may be carried out across all possible subsets. A subset may be selected which provides better system efficiency than the subset providing the lowest system efficiency. Thus, in embodiments, the means for selecting can be adapted to select the subset of assignment sets based on a maximization of a cumulated quality measure based on all radio resources in the set of radio resources.

Consequently, the means for determining the quality measure for each of the assignment sets can be adapted to determine the quality measure by evaluating an individual quality measure of each user in the assignment set based on a joint utilization of the radio resource by all users from the assignment set and an interference reduction technique between the users of the assignment set. The inference reduction technique may e.g. be carried out by using multiple antennas, different spatial signatures, beamforming, spatial interference cancellation, spatial division multiple access, spatial multiplexing, non-orthogonal superposition and/or multi-user detection.

In embodiments, the means for grouping can be adapted to group at least a first subgroup of users and a second subgroup of users. The means for forming the assignment sets can be adapted to form an assignment set for each radio resource and any pair of users from the first and the second subgroups of users, wherein each pair of users comprises one user from the first subgroup and one user from the second subgroup. In other words, in an embodiment only two subgroups of users may be formed, for example, each comprising as many users as there are radio resources in the set of radio resource. It is to be noted, that some users may be part of multiple subgroups, in the embodiment with the two subgroups, some users may be in both subgroups.

In embodiments the radio resources can correspond to uplink radio resources for transmission from a mobile transceiver or a user to the mobile communication system or the radio resources can correspond to downlink radio resources for transmission from the mobile communication system to the mobile transceiver or the user. The group of users may correspond to the users of a base station transceiver of the mobile communication system and each subgroup may have the same number of users. The set of radio resources may have the same number of radio resources as there are users in a subgroup.

In some embodiments, the group of users can correspond to $J=\{0, ..., K-1\}$ having $K$ users and the set of radio resources can correspond to $I=\{0, ..., N-1\}$ having $N$ radio resources. The first subgroup and the second subgroup may comprise the same number of users. The means for grouping can be adapted to group a first subgroup $J_1$ of users and an identical second subgroup $J_2$ of users, and wherein the means for forming the assignment sets is adapted to form a set of $N$ triples $(i,j,k)$ with $i \in I$, $j \in J_1$ and $k \in J_2$ as the plurality of assignment sets. The means for determining can be adapted to determine a sum of positive coefficients $c_{ijk}$ assigned to each of the triples as quality measure. The means for selecting can be adapted to solve a three index assignment problem in such a way that each radio resource $i \in I$ is in exactly one of the assignment sets, where the subset of assignment sets is selected based on searching for

$$\arg\max_{x_{ijk}} \sum_{i=0}^{N-1} \sum_{j=0}^{K_1-1} \sum_{k=0}^{K_2-1} c_{ijk} x_{ijk} ,$$

subject to

$$\sum_{j=0}^{K_1-1}\sum_{k=0}^{K_2-1} x_{ijk} = 1, \quad \forall \ i \in I,$$

$$\sum_{i=0}^{N-1}\sum_{k=0}^{K_2-1} x_{ijk} = 1, \quad \forall \ j \in J_1,$$

$$\sum_{i=0}^{N-1}\sum_{j=0}^{K_1-1} x_{ijk} = 1, \quad \forall \ k \in J_2,$$

and

$$x_{ijk} \in \{0,1\}, \quad \forall \ i \in I, j \in J_1, k \in J_2.$$

The means for selecting can be adapted to solve the axial three-index assignment problem by solving an integer linear programming problem by defining

$$\xi_{i+Nj+NK_1k} = x_{ijk} \quad \text{for } i \in I, j \in J_1, k \in J_2,$$

and coefficients $\alpha_{v,\mu}$, with $v = 0,...,N + K_1 + K_2$ -1 and $\mu = 0,..., NK_1K_2$ -1 with the following $N + K_1 + K_2$ constraints

$$\text{for all } v \in I \qquad \alpha_{v,i+Nj+NK_1k} = \begin{cases} 1 & \text{for } i = v, \ j \in J_1, \ k \in J_2 \\ 0 & \text{else} \end{cases},$$

$$\text{for all } v \in J_1 \qquad \alpha_{N+v,i+Nj+NK_1k} = \begin{cases} 1 & \text{for } i \in I, \ j = v, \ k \in J_2 \\ 0 & \text{else} \end{cases},$$

$$\text{for all } v \in J_2 \qquad \alpha_{N+K_1+v,i+Nj+NK_1k} = \begin{cases} 1 & \text{for } i \in I, \ j \in J_1, \ k = v \\ 0 & \text{else} \end{cases},$$

additionally, defining coeffcients $\gamma_i$ as

$$\gamma_{i+Nj+NK_1k} = c_{ijk} \quad \text{for } i \in I, \ j \in J_1, \ k \in J_2,$$

and solving the optimization problem as
search for

$$\arg \max_{\xi_i, i \in \{0,...NK_1K_2-1\}} \sum_{i=0}^{NK_1K_2-1} \gamma_i \xi_i,$$

with the constraints

$$\sum_{v=0}^{NK_1K_2-1} \alpha_{i,v} \xi_v = 1, \ \forall \ i \in I,$$

$$\sum_{v=0}^{NK_1K_2-1} \alpha_{N+j,v} \xi_v = 1, \ \forall \ j \in J_1,$$

$$\sum_{v=0}^{NK_1K_2-1} \alpha_{N+K_1+k,v} \xi_v = 1, \ \forall \ k \in J_2,$$

$$\xi_v \in \{0,1\} \ \forall \ v \in \{0,...,NK_1K_2-1\}.$$

The means for selecting can be further adapted for calculating the coeffcients $c_{ijk}$ from channel states of the users taking into account an interference condition between the users of the respective assignment set, transforming the coefficients $c_{ijk}$ into coefficients $\xi_i$, calculating $\xi_i$ by solving the optimization problem and transforming the $\xi_i$ into $x_{ijk}$, searching for indices of non-zero valued $x_{ijk}$, and selecting the subset of the assignment sets based on the indices of non-zero valued $x_{ijk}$.

The means for selecting can be adapted to convert the integer linear programming problem into a linear programming problem with the constraint of $0 \leq \xi_v \leq 1$, $\xi_v \in R \ \forall \ v \in \{0,...,NK_1K_2\text{-}1\}$.

The means for selecting can be adapted to solve the linear programming problem and to verify whether $\xi_v \in \{0,1\} \ \forall \ v \ \{0,...,NK_1K_2\text{-}1\}$ and if not, to further solve the integer linear programming problem to find $\xi_v \in \{0,1\} \ \forall \ v \in \{0,...,NK_1K_2\text{-}1\}$. Moreover, in embodiments $\sum_{i=0}^{N-1} \sum_{j=0}^{K_1-1} x_{ijk} \leq L$, $\forall \ k \in J_2$ with the integer $L > 1$, i.e. instead of having each user from the second subgroup only be scheduled once, users of the second subgroup may then be scheduled up to $L$ times. A user being in both subgroups may then be scheduled $L+1$ times.

In embodiments the means for grouping can be adapted to group at least a first subgroup of users and a second subgroup of users, wherein the users of the second subgroup have a better radio channel quality in the mobile communication system than the users of the first group. The radio channel quality may be determined in terms of one of or a combination of a Signal-to-Noise Ratio (SNR), a Signal-to-Interference Ratio (SIR), a Signal-to-Interference-and-Noise Ratio (SINR), a pathloss, a received signal strength, a data rate, etc. of the users in the mobile communication system. The radio channel quality may be determined in terms of measurements, which can be carried out by the user, i.e. a mobile terminal or transceiver, or an entity of the mobile communication system as e.g. a base station transceiver.

Embodiments further provide a base station transceiver of a mobile communication system comprising the above apparatus.

Embodiments further provide a method for selecting users from a group of users to be assigned to radio resources from a set of radio resources. A radio resource being used for communicating packet switched data between users and a mobile communication system. The method comprises a step of grouping a plurality of subgroups of users from the group of users and a step of forming a plurality of assignment sets, an assignment set comprising one radio resource from the set of radio resources and one user from each of the plurality of subgroups, the plurality of assignment sets comprising one assignment set for each combination of a radio resource from the set of radio resources with the users from the subgroups. The method comprises a further step of determining a quality measure for each of the assignment sets, the quality measure of an assignment set comprises information on a communication quality achieved when using the radio resource of the assignment set for communicating packet switched data between the users of the assignment set and the mobile communication system and a step of selecting a subset of assignment sets from the plurality of assignments sets based on the quality measures, the subset of assignment sets comprising one assignment set for each radio resource of the set of radio resources.

Embodiments further provide a computer program having a program code for performing one of the above described methods, when the computer program is executed on a computer or processor.

Brief description of the Figures

Some other features or aspects will be described using the following non-limiting embodiments of apparatuses and/or methods and/or computer programs by way of example only, and with reference to the accompanying figure, in which

Figure 1 shows an embodiment of an apparatus for selecting users;

Figure 2 illustrates the selection of users in an embodiment; and

Figure 3 shows a block diagram of an embodiment of a method for selecting users.

Description of some Embodiments

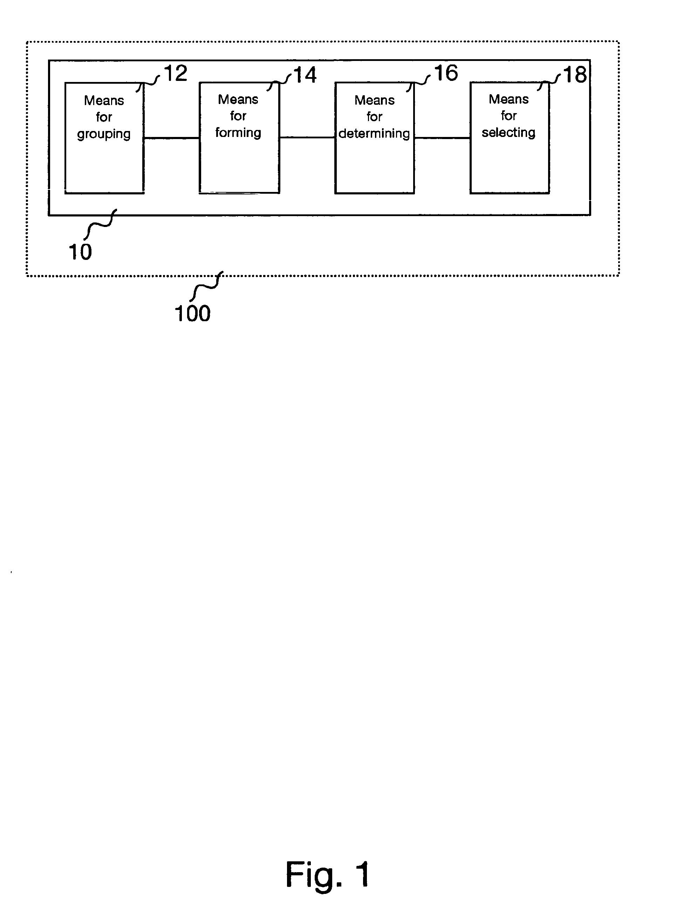

Figure 1 shows an embodiment of an apparatus 10 for selecting users from a group of users to be assigned to radio resources from a set of radio resources. A radio resource being used for communicating packet switched data between users and a mobile communication system. The embodiment of the apparatus 10 comprises means for grouping 12 a plurality of subgroups of users from the group of users. The apparatus 10 further comprises means for forming 14 a plurality of assignment sets. An assignment set comprises one radio resource from the set of radio ressources and one user from each of the plurality of subgroups. The plurality of assignment sets comprises one assignment set for each combination of a radio resource from the set of radio resources with the users from the subgroups. Moreover, the apparatus 10 comprises means for determining 16 a quality measure for each of the assignment sets. The quality measure of an assignment set comprises information on a communication quality achieved when jointly using the radio resource of the assignment set for communicating packet switched data between the users of the assignment set and the mobile communication system. The apparatus 10 comprises means for selecting 18 a subset of assignment sets from the plurality of assignments sets based on the quality measures. The subset of assignment sets comprises one assignment set for each radio resource from the set of radio resources.

Furthermore, Figure 1 shows a base station transceiver 100, which comprises the apparatus 10.

In the following embodiment, it is assumed that the group of users *has K* active users, an active user can be scheduled, e.g. has data for scheduling in his buffers or in the buffers of the associated base station transceiver. Moreover, the number of radio resources available in a frame, i.e. the set of radio resources is termed $N$. The apparatus 10 is adapted to select for each radio resource $i$ in a frame a set of users in such a way that the number of times a user is scheduled in a frame is limited and an objective function, i.e. a quality measure like for example the sum or the weighted sum of the rates achievable by taking into account multi-user interference, is maximized. Resources and users are identified by their indexes and the set of resources will be referred to as $I = \{0,...,N\text{-}1\}$, the group of users will be referred to as $J = \{0,...,K\text{-}1\}$.

In a first step, an embodiment is considered for the case where each of the resources is assigned to a pair of two users and each user is scheduled exactly twice. Subsequently, further embodiments will be considered, where the above embodiment is generalized to the cases where some users are scheduled more often or more than two users share one resource.

In the present embodiment, a special case is considered, where pairs consisting of two users are assigned to each of the resources in an assignment set. Referring to Figure 1, the means for grouping 12 is adapted to group at least a first subgroup $J_1$ of users and a second subgroup of users $J_2$. The means for forming 14 is adapted to form an assignment set for each radio resource and any pair of users from the first subgroup $J_1$ and the second subgroup $J_2$ of users, wherein each pair of users comprises one user from the first subgroup $J_1$ and one user from the second subgroup $J_2$.

According to the embodiment a scheduling problem, i.e. the selection of the subset of assignment sets, is solved in the following way. The two subgroups *of J:* $J_1 \subseteq J$ with $K_1$ elements and $J_2 \subseteq J$ with $K_2$ elements are selected. In this embodiment, the first subgroup $J_1$ and the second subgroup $J_2$ comprise the same number of users. In other words, each of the two subgroups has the same number of elements as $I$, which is the number of radio resources in the set of radio resources. The subgroups are not necessarily disjoint, i.e., for example, both subgroups may be equal to the complete set of users $J$. There are three sets and subgroups: The first set is the set of radio resources $I$, the second set is the first subgroup of users $J_1$, and the third set is the second subgroup of users $J_2$.

The apparatus 10, i.e. the means for forming 14, may now find or form sets of $N$ triples $(i,j,k)$ as assignment sets with $i \in I$, $j \in J_1$ and $k \in J_2$ in such a way that each radio resource $i \in I$ is in exactly one of the triples, each user from the first subgroup $j \in J_1$ is exactly in one of the triples, and each user from the second subgroup $k \in J_2$ is exactly in one of the triples, i.e. each user is scheduled once from each of the subgroups he is contained in. These triples correspond to assignment sets. If a user is in both-subgroups, he is scheduled twice. In this embodiment, the group of users $J$ corresponds to the users of the base station transceiver 100 of the mobile communication system. Each subgroup $J_1$, $J_2$ has the same number of users and the set of radio resources $I$ has the same number of radio resources as there are users in a subgroup $J_1$, $J_2$.

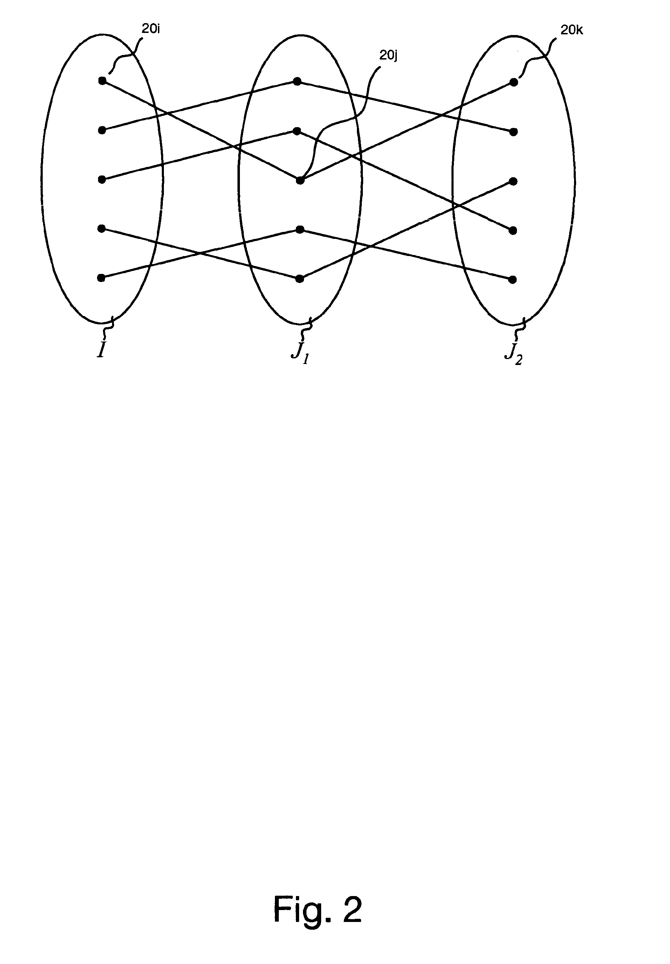

Figure 2 illustrates the selection of users in this embodiment. Figure 2 shows the set of radio resources $I$, the first subgroup of users $J_1$ and the second subgroup of users $J_2$. The elements of the sets, i.e. radio resources in $I$ and the users in $J_1$ and $J_2$ are indicated by dots 20i, 20j and 20k, of which only a single one per set is referenced with a reference sign for simplicity reasons. The subset of the assignment sets is indicated by the connections or links between the respective dots. In other words, the slinks indicate that the assignment set for radio resource 20i includes user 20j from subgroup $J_1$ and user 20k from subgroup $J_2$. Figure 2 further illustrates that all radio resources are assigned to assignment sets, as well as all users from both subgroups. Each radio resource and each user belong to a single assignment set of the subset of assignment sets.

Additionally a sum of positive coefficients $c_{ijk}$ is assigned to each of the selected triples as quality measures for the assignment sets by the means for determining 16 and forming an objective function, which shall be maximized. In other words, the means for selecting 18 is adapted to select the subset of assignment sets based on a maximization of a cumulated quality measure based on all radio resources $i \in I$ in the set of radio resources $I$.

The coefficients $c_{ijk}$ can for example represent the sum or a weighted sum of the rates achievable by the users $j$ and $k$ when sharing radio resource $i$. That is to say, $c_{ijk}$ is the weighted sum of rates achieved by using this resource and taking into account the interference between these users' signals. The sum rate corresponds to the sum of the individual user rates in the assignment set and is the special case where both weights are equal to one. In other words, the means for determining 16 the quality measure $c_{ijk}$ for each of the assignment sets is adapted to determine the quality measure by evaluating an individual quality measure of each user in the assignment set based on a joint utilization of the radio resource by all users from the assignment set and an interference reduction technique between the users of the assignment set. Here, the quality measure $c_{ijk}$ corresponds to a cumulated data rate achieved by the users of the assignment set when jointly using the radio resource of the assignment set.

Note that embodiments are not limited to a certain direction of data transmission between the users and the mobile communication system. The radio resources can correspond to uplink radio resources for transmission from a mobile transceiver or a user to the mobile communication system or the radio resources can correspond to downlink radio resources for transmission from the mobile communication system to the mobile transceiver or the user.

In other words, the group of users corresponds to $J = \{0,..., K\text{-}1\}$ having $K$ users and the set of radio resources corresponds to $I = \{0,...,N\text{-}1\}$ having $N$ radio resources. The means for grouping 12 is adapted to group a first subgroup $J_1$ of users and an identical second subgroup $J_2$ of users, and the means for forming 14 the assignment sets is adapted to form a set of $N$ triples $(i, j, k)$ with $i \in I, j \in J_1$ and $k \in J_2$ as the plurality of assignment sets. The means for determining 16 is adapted to determine a sum of positive coefficients $c_{ijk}$ assigned to each of the triples as quality measure. The means for selecting 18 is adapted to solve a three index assignment problem in such a way that each radio resource $i \in I$ is in exactly one of the assignment sets. The subset of assignment sets is selected based on searching for

$$\arg\max_{x_{ijk}} \sum_{i=0}^{N-1}\sum_{j=0}^{K_1-1}\sum_{k=0}^{K_2-1} c_{ijk} x_{ijk} \qquad (1a)$$

subject to

$$\sum_{j=0}^{K_1-1}\sum_{k=0}^{K_2-1} x_{ijk} = 1, \quad \forall\ i \in I \qquad (1b)$$

$$\sum_{i=0}^{N-1}\sum_{k=0}^{K_2-1} x_{ijk} = 1, \quad \forall\ j \in J_1 \qquad (1c)$$

$$\sum_{i=0}^{N-1}\sum_{j=0}^{K_1-1} x_{ijk} = 1, \quad \forall\ k \in J_2 \qquad (1d)$$

and with

$$x_{ijk} \in \{0,1\}, \quad \forall\ i \in I, j \in J_1, k \in J_2 \quad , \qquad (1e)$$

where the numbers $x_{ijk} \in \{0,1\}$ indicate whether a possible triple $(i,j,k)$ has been selected ($x_{ijk} = 1$) or not ($x_{ijk} = 0$). This is a so called axial three-index assignment problem or in 5 graph theory a maximum weighted tripartite matching problem. It can be solved by methods, which are for example described in Burkard, R., Dell'Amico. M. and Martello, S.: "Assignment Problems", SIAM, 2009.

In a further embodiment, the means for selecting 18 is further adapted to solve the axial three-index assignment problem by solving an integer linear programming problem by defining $NK_1K_2$ variables

$$\xi_{i+Nj+NK_1 k} = x_{ijk} \quad \text{for } i \in I, j \in J_1, k \in J_2, \tag{2}$$

and coefficients $\alpha_{v,\mu}$, with $v=0,...,N+K_1+K_2-1$ and $\mu = 0,...,NK_1K_2-1$ with the following $N+K_1+K_2$ constraints

$$\text{for all } v \in I \quad \alpha_{v,i+Nj+NK_1 k} = \begin{cases} 1 & \text{for } i = v, \ j \in J_1, \ k \in J_2 \\ 0 & \text{else} \end{cases}, \tag{3a}$$

$$\text{for all } v \in J_1 \quad \alpha_{N+v,i+Nj+NK_1 k} = \begin{cases} 1 & \text{for } i \in I, \ j = v, \ k \in J_2 \\ 0 & \text{else} \end{cases}, \tag{3b}$$

$$\text{for all } v \in J_2 \quad \alpha_{N+K_1+v,i+Nj+NK_1 k} = \begin{cases} 1 & \text{for } i \in I, \ j \in J_1, \ k = v \\ 0 & \text{else} \end{cases}, \tag{3c}$$

additionally defined coefficients $\gamma_i$ as

$$\gamma_{i+Nj+NK_1 k} = c_{ijk} \quad \text{for } i \in I, \ j \in J_1, \ k \in J_2, \tag{4}$$

and solving the optimization problem as

$$\arg \max_{\xi_i, i \in \{0,...NK_1K_2-1\}} \sum_{i=0}^{NK_1K_2-1} \gamma_i \xi_i, \tag{5a}$$

with the constraints

$$\sum_{v=0}^{NK_1K_2-1} \alpha_{i,v} \xi_v = 1, \ \forall \ i \in I, \tag{5b}$$

$$\sum_{v=0}^{NK_1K_2-1} \alpha_{N+j,v} \xi_v = 1, \ \forall \ j \in J_1, \tag{5c}$$

$$\sum_{\nu=0}^{NK_1K_2-1} \alpha_{N+K_1+k,\nu}\xi_\nu = 1, \quad \forall \ k \in J_2, \tag{5d}$$

$$\xi_\nu \in \{0,1\} \quad \forall \ \nu \in \{0,...,NK_1K_2-1\}. \tag{5e}$$

This is an Integer Linear Programming (ILP) problem because the values of the variables are restricted to the integers 0 or 1. There are methods for solving such problems, cf., e.g. chapters 13, 14 in Christos H. Papadimtriou and Kenneth Steiglitz, Combinatorial Optimization: Algorithms and Complexity, Dover 1998 or Part IV of Alexander Schrijver, Theory of Linear and Integer Programming, John Wiley and Sons, New York, 1987. The integer LP problem is a special case of mixed integer programming problems (MIP), which can be solved by methods described e.g. in George L. Nemhauser and Laurence A. Wolsey, Integer and Combinatorial Optimization, John Wiley & Sons, New York, 1988. There are also computer programs for solving ILP or MIP problems, cf., for example, Gnu Linear Programming Toolkit (GLPK). Online: www ngnu.org/s/pk/, Reference Manual for GLPK Version 4.45 (DRAFT, December 2010).

The algorithm for scheduling or selecting the subset of assignment sets of users can be summarized as follows:

-    Calculate the coefficients $c_{ijk}$ from channel states taking into account the interference between the users and transform them into coefficients $\gamma_\nu$

-    Calculate $\xi_\nu$ by solving the optimization problem and transform them into $x_{ijk}$

-    Search for non-zero valued $x_{ijk}$, of which the indices of non-zero valued $x_{ijk}$ refer to the scheduled users: users $j$ and $k$ are scheduled on resource $i$, i.e. the assignment set $i,j,k$ is selected for the subset of assignment sets.

In other words, the means for selecting 18 is adapted for calculating the coefficients $c_{ijk}$ from channel states of the users taking into account an interference condition between the users of the respective assignment set. The means for selecting 18 is adapted for transforming the coefficients $c_{ijk}$ into coefficients $\gamma_\nu$ and for calculating $\xi_\nu$ by solving the optimization problem. The means for selecting 18 is further adapted for transforming the $\xi_\nu$ into $x_{ijk}$ and for searching for indices of non-zero valued $x_{ijk}$. Hence, the means for selecting 18 is adapted for selecting the subset of the assignment sets based on the indices of non-zero valued $x_{ijk}$.

To reduce the computational complexity, the problem formulation can be modified by replacing constraint (5e) by

$$0 \le \xi_\nu \le 1, \ \xi_\nu \in R \quad \forall \ \nu \in \{0,...,NK_1K_2-1\}. \tag{6}$$

Now the problem is a Linear Programming (LP) problem and can be solved more efficiently by standard linear programming algorithms like the Simplex method, cf., e.g., chapters 2 - 4 in Christos H. Papadimtriou and Kenneth Steiglitz, Combinatorial Optimization: Algorithms and Complexity, Dover 1998 or so-called interior-point methods, cf, e.g., Stephen Wright, Primal-Dual Interior-Point Methods. Philadelphia, PA: SIAM, 2007 or chapter 11 in Stephen Boyd and Lieven Vandenberghe, Convex Optimization, Cambridge, 2004. Software for solving LP problems is also included in the GLPK, cf. above. In this embodiment, the means for selecting 18 is adapted to convert the integer linear programming problem into a linear programming problem with the constraint of equation (6). However, in this embodiment, it is no longer guaranteed that the solution is integer, i.e.

$$\xi_\nu \in \{0,1\} \quad \forall \ \nu \in \{0,...,NK_1K_2-1\}.$$

Therefore after solving the LP problem it is checked, whether the solution is integer, and if this is not the case, which typically can happen in certain cases when using interior-point methods, the LP problem is solved by a Simplex method, which generates solutions on the vertices of the feasible region and such can provide an integer solution where interior-point methods don't, or the original problem is solved by an integer LP algorithm or a mixed integer LP algorithm, which possibly requires more computation time/operations. Thus, the means for selecting 18 is adapted to solve the LP problem and to verify whether $\xi_v \in \{0,1\} \ \forall \ v \in \{0,...,NK_1K_2\text{-}1\}$ and if not, to further solve the LP problem by an alternative method or to solve the integer LP problem to find $\xi_v \in \{0,1\} \ \forall \ v \in \{0,...,NK_1K_2\text{-}1\}$.

It turned out that in most of the practical cases an integer solution was found for the linear programming problem, and only in a small number of cases it was necessary to solve the integer linear programming problem. This means that if the linear programming algorithm is more efficient, computational complexity can be significantly reduced by the embodiment, which can be summarized as follows:

-    Solve the linear programming problem

-    Check whether the solution is integer

-    If the solution is not integer, solve LP problem by an alternative method or search for integer solution with (Mixed) Integer linear Programming (MIP) solver; see e.g. Gnu Linear Programming Toolkit (GLPK). Online: www.gnu.org/s/glnk/.

There are different methods for choosing the subgroups $J_1$ and $J_2$. Different choices may require changing the number of resources by dividing the available frequency band or time slot differently in order to match the sizes of the three sets (the set of radio resources and the two subgroups). According to the above embodiment, one choice is $J_1 = J_2 = J$. In that case each user is scheduled twice per frame, once from each of the two subgroups.

In another embodiment, the means for grouping 12 is adapted to group at least a first subgroup $J_1$ of users and a second subgroup $J_2$ of users, where the users of the second subgroup $J_2$ *have* a better radio channel quality in the mobile communication system than the users of the first subgroup $J_1$. The radio channel quality may be determined in line with the above mentioned options for determining the quality measure. In other words, in this embodiment, the users are sorted, for example, according to their average path loss (or their SNR or SINR) and the means for grouping is adapted to choose the $K/2$ users with the lowest path losses as $J_2$ and the $K/2$ users with the highest path losses as $J_1$. This special choice still leaves enough degrees of freedom for the pairing and is especially well suited for wireless transmission methods based on non-orthogonal superposition in systems where the users have significantly different path losses. In this case $N$ should be chosen to be $K/2$ and each user is scheduled once per frame or in the set of radio resources.

To make the embodiment more flexible some generalizations can be done. E.g. to allow some users to be scheduled more often than others the constraint (5d) can be replaced by

$$\sum_{i=0}^{N-1}\sum_{j=0}^{K_1-1} x_{ijk} \leq L \ , \ \ \forall \ k \in J_2 \text{, with the integer } L > 1. \tag{7}$$

In that case each user from the first subgroup $J_1$ is scheduled once and additionally each user in the second set $J_2$ is scheduled up *to L* times. This means that a user who is in both sets will be scheduled between once and *L+1* times in that frame.

The proposed embodiments and methods can in principle be extended to mapping larger groups of $Q$ users to a single resource by searching for a set of *(Q+1)-tuples*. The actual computation of a solution for such a Q-user problem may be complex. In such a general embodiment the means for selecting 18 may search for

$$\arg \max_{x_{i,j_1,j_2,...,jQ}} \sum_{i=0}^{N-1}\sum_{j_1=0}^{K_1-1}\sum_{j_2=0}^{K_2-1}...\sum_{jQ=0}^{K_Q-1} c_{i,j_1,j_2,...jQ} x_{i,j_1,j_2,...,jQ} \ , \tag{8a}$$

subject to

$$\sum_{j_1=0}^{K_1-1}\sum_{j_2=0}^{K_2-1}\cdots\sum_{j_Q=0}^{K_Q-1}x_{i,j_1,j_2,\ldots,j_Q}=1, \quad \forall \; i \in I, \tag{8b}$$

$$\sum_{i=0}^{N-1}\sum_{j_2=0}^{K_2-1}\cdots\sum_{j_Q=0}^{K_Q-1}x_{i,j_1,j_2,\ldots,j_Q}=1, \quad \forall \; j_1 \in J_1, \tag{8c}$$

$$\sum_{i=0}^{N-1}\sum_{j_1=0}^{K_1-1}\sum_{j_3=0}^{K_3-1}\cdots\sum_{j_Q=0}^{K_Q-1}x_{i,j_1,j_2,\ldots,j_Q}=1, \quad \forall \; j_2 \in J_2, \tag{8d}$$

$$\ldots$$

$$\sum_{i=0}^{N-1}\sum_{j_1=0}^{K_1-1}\cdots\sum_{j_{Q-1}=0}^{K_{Q-1}-1}x_{i,j_1,j_2,\ldots,j_Q}=1, \quad \forall \; j_Q \in J_Q, \tag{8e}$$

and

$$x_{i,j_1,j_2,\ldots,j_Q} \in \{0,1\}, \quad \forall \; i \in I, j_1 \in J, j_2 \in J_2,\ldots, j_Q \in J_Q. \tag{8f}$$

Each of the constraints guarantees that each element of a set $J_v$, $v \in \{1,\ldots,Q\}$ is taken exactly once (or after modification corresponding to (7) not more than L times). (8f) can be modified similar to (6).

The proposed method and embodiments can be applied to capacity estimations via simulations or potentially for real-time scheduling in a running system.

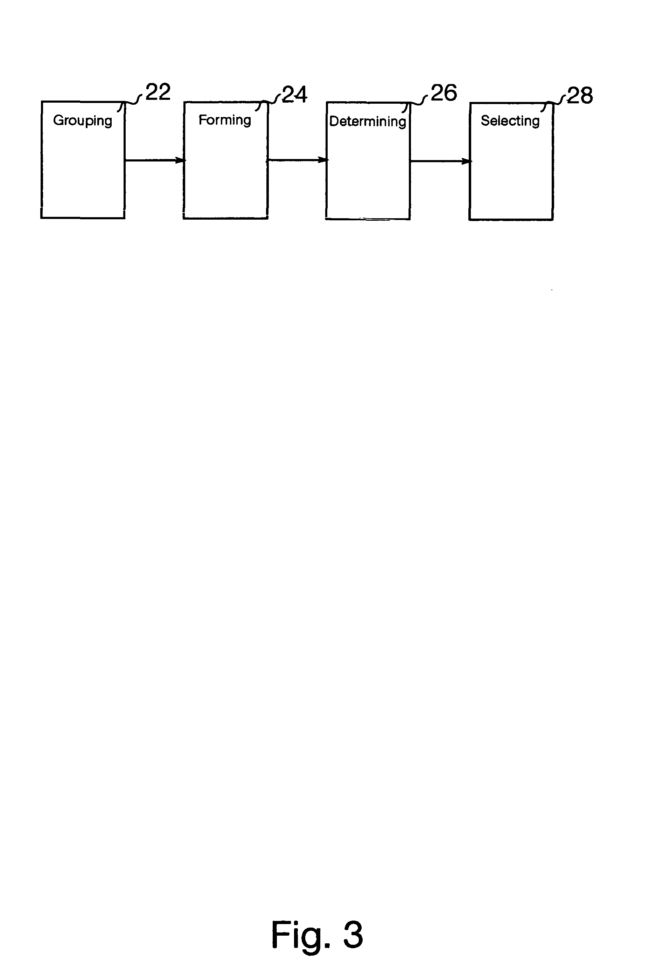

Figure 3 shows a block diagram of an embodiment of a method for selecting users from a group of users to be assigned to radio resources from a set of radio resources. A radio resource being used for communicating packet switched data between users and a mobile communication system. The method comprises a step of grouping 22 a plurality of subgroups of users from the group of users and a step of forming 24 a plurality of assignment sets. An assignment set comprises one radio resource from the set of radio resources and one user from each of the plurality of subgroups and the plurality of assignment sets comprises one assignment set for each combination of a radio resource from the set of radio resources with the users from the subgroups. The method further comprises a step of determining 26 a quality measure for each of the assignment sets. The quality measure of an assignment set comprises information on a communication quality achieved when using the radio resource of the assignment set for communicating packet switched data between the users of the assignment set and the mobile communication system. The method further comprises a step of selecting 28 a subset of assignment sets from the plurality of assignments sets based on the quality measures, the subset of assignment sets comprising one assignment set for each radio resource of the set of radio resources.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for forming", "means for grouping", "means for determining", "means for selecting", etc., may be provided through the use of dedicated hardware, such as "a former", "a determine", "a selector", "a grouper" etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, trough the interaction of program control and dedicated logic, or even manually, the particular technique being delectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (10) for selecting *users j;k* from a group of users $K$ to be assigned to radio resources from a set of radio resources $I$, a radio resource $i$ being used for communicating packet switched data between users $j;k$ and a mobile communication system, the apparatus (10) comprising
means for grouping (12) a plurality of subgroups $J_1;J_2$ of users from the group of users $K$;
means for forming (14) a plurality of assignment sets, an assignment set comprising one radio resource $i$ from the set of radio resources $I$ and one user $j; k$ from each of the plurality of subgroups $J_1;J_2$, the plurality of assignment sets comprising one assignment set for each combination of a radio resource $i$ from the set of radio resources $I$ with the *users j; k* from the *subgroups $J_1;J_2$*;
means for determining (16) a quality measure $c_{ijk}$ for each of the assignment sets, the quality measure $c_{ijk}$ of an

assignment set comprising information on a communication quality achieved when jointly using the radio resource $i$ of the assignment set for communicating packet switched data between the users $j;k$ of the assignment set and the mobile communication system; and
means for selecting (18) a subset of assignment sets from the plurality of assignments sets based on the quality measures $c_{ijk}$, the subset of assignment sets comprising one assignment set for each radio *resource* $i$ from the set of radio resources $I$.

2. The apparatus (10) of claim 1, wherein the means for grouping (12) is adapted to group at least a first subgroup $J_1$ of users and a second group of users $J_2$ and wherein the means for forming (14) is adapted to form an assignment set for each radio resource $i$ and any pair of users $j;k$ from the first-subgroup $J_1$ and the second subgroup $J_2$ of users, each pair of users $j; k$ comprising one user $j$ from the first subgroup $J_1$ and one user $k$ from the second subgroup $J_2$.

3. The apparatus (10) of claim 1, wherein the means for selecting (18) is adapted to select the subset of assignment sets based on a maximization of a cumulated quality measure based on all radio resources $i \in I$ in the set of radio resources $I$.

4. The apparatus (10) of claim 1, wherein the radio resources $\underline{i}$ correspond to uplink radio resources for transmission from a mobile transceiver (100) or a user $j;k$ to the mobile communication system or wherein the radio resources $i$ correspond to downlink radio resources for transmission from the mobile communication system to the mobile transceiver (100) or the user $j;k$.

5. The apparatus (10) of claim 1, wherein the means for determining (16) the quality measure $c_{ijk}$ for each of the assignment sets is adapted to determine the quality measure $c_{ijk}$ by evaluating an individual quality measure of each user in the assignment set based on a joint utilization of the radio resource $i$ by all users $j;k$ from the assignment set and an interference reduction technique between the users $j;k$ of the assignment set.

6. The apparatus (10) of claim 1, wherein the quality measure $c_{ijk}$ corresponds to a cumulated data rate achieved by the users $j;k$ of an assignment set when jointly using the radio resource $i$ of the assignment set.

7. The apparatus (10) of claim 1, wherein the group of users $J$ corresponds to the users of a base station transceiver (100) of the mobile communication system and wherein each subgroup $J_1;J_2$ has the same number of users and wherein the set of radio resources $I$ has the same number of radio resources as there are users in a subgroup $J_1;J_2$.

8. The apparatus (10) of claim 7, wherein the group of users $J$ corresponds to $J=\{0,...,K-1\}$ having $K$ users and wherein the set of radio resources corresponds to $I=(0,...,N-1\}$ having $N$ radio resources, wherein the means for grouping (12) is adapted to group a first subgroup $J_1$ of users and an identical second subgroup $J_2$ of users, and wherein the means for forming (14) the assignment sets is adapted to form a set of $N$ triples $i, j, k$ with $i \in I, j \in J_1$ and $k \in J_2$ as the plurality of assignment sets, wherein the means for determining (16) is adapted to determine a sum of positive coefficients $c_{ijk}$ assigned to each of the triples as quality measure $c_{ijk}$, and wherein the means for selecting (18) is adapted to solve a three index assignment problem in such a way that each radio resource $i \in I$ is in exactly one of the assignment sets, where the subset of assignment sets is selected based on searching for

$$\arg\max_{x_{ijk}} \sum_{i=0}^{N-1} \sum_{j=0}^{K_1-1} \sum_{k=0}^{K_2-1} c_{ijk} x_{ijk} \ ,$$

subject to

$$\sum_{j=0}^{K_1-1} \sum_{k=0}^{K_2-1} x_{ijk} = 1, \ \forall \ i \in I \, ,$$

$$\sum_{i=0}^{N-1}\sum_{k=0}^{K_2-1} x_{ijk} = 1, \quad \forall \; j \in J_1,$$

$$\sum_{i=0}^{N-1}\sum_{j=0}^{K_1-1} x_{ijk} = 1, \quad \forall \; k \in J_2.$$

9.  The apparatus (10) of claim 8, wherein the means for selecting (18) is further adapted to solve the axial three-index assignment problem by solving an integer linear programming problem by defining $NK_1K_2$ *variables*

$$\xi_{i+Nj+NK_1k} = x_{ijk} \quad \text{for} \; i \in I, j \in J_1, k \in J_2,$$

and coefficients $\alpha_{\nu,\mu}$, with $\nu = 0,...,N+K_1+K_2-1$ and $\mu = 0,...,NK_1K_2-1$ with the following $N+K_1 + K_2$ constraints

$$\text{for all } \nu \in I \qquad \alpha_{\nu,i+Nj+NK_1k} = \begin{cases} 1 & \text{for } i = \nu, \; j \in J_1, \; k \in J_2 \\ 0 & \text{else} \end{cases},$$

$$\text{for all } \nu \in J_1 \qquad \alpha_{N+\nu,i+Nj+NK_1k} = \begin{cases} 1 & \text{for } i \in I, \; j = \nu, \; k \in J_2 \\ 0 & \text{else} \end{cases},$$

$$\text{for all } \nu \in J_2 \qquad \alpha_{N+K_1+\nu,i+Nj+NK_1k} = \begin{cases} 1 & \text{for } i \in I, \; j \in J_1, \; k = \nu \\ 0 & \text{else} \end{cases},$$

additionally defined coefficients $\gamma_i$ as

$$\gamma_{i+Nj+NK_1k} = c_{ijk} \quad \text{for} \; i \in I, \; j \in J_1, \; k \in J_2,$$

and solving the optimization problem as

$$\arg \max_{\xi_i, i \in \{0,\ldots,NK_1K_2-1\}} \sum_{i=0}^{NK_1K_2-1} \gamma_i \xi_i \, ,$$

with the constraints

$$\sum_{v=0}^{NK_1K_2-1} \alpha_{i,v} \xi_v = 1, \quad \forall \ i \in I ,$$

$$\sum_{v=0}^{NK_1K_2-1} \alpha_{N+j,v} \xi_v = 1, \quad \forall \ j \in J_1 ,$$

$$\sum_{v=0}^{NK_1K_2-1} \alpha_{N+K_1+k,v} \xi_v = 1, \quad \forall \ k \in J_2 ,$$

$$\xi_v \in \{0,1\} \quad \forall \ v \in \{0,\ldots,NK_1K_2-1\}.$$

**10.** The apparatus (10) of claim 9, wherein the means for selecting (18) is further adapted for calculating the coefficients $c_{ijk}$ from channel states of the users $j;k$ taking into account an interference condition between the users of the respective assignment set, transforming the coefficients $c_{ijk}$ into coefficients $\xi_i$, calculating $\xi_i$ by solving the optimization problem and transforming the $\xi_i$ into $x_{ijk}$, searching for indices of non-zero valued $x_{ijk}$, selecting the subset of the assignment sets based on the indices of non-zero valued $x_{ijk}$, and/or wherein the means for selecting (18) is adapted to convert the integer linear programming problem into a linear programming problem with the constraint of $0 \leq \xi_v \leq 1, \xi_v \in R \ \forall_v \in \{0,\ldots,NK_1K_2-1\}$.

**11.** The apparatus (10) of claim 10, wherein the means for selecting (18) is adapted to solve the linear programming problem by an interior point method and to verify whether $\xi_v \in \{0,1\} \ \forall \ v \in \{0,\ldots,NK_1K_2-1\}$ and if not, to solve the linear programming problem by a Simplex method and to verify whether $\xi_v \in \{0,1\} \ \forall \ v \in \{0,\ldots,NK_1K_2-1\}$ and if not, to further solve the integer linear programming problem to find $\xi_v \in \{0,1\} \ \forall \ v \in \{0,\ldots,NK_1K_2-1\}$.

**12.** The apparatus (10) of claim 1, wherein the means for grouping (12) is adapted to group at least a first subgroup $J_1$ of users and a second subgroup $J_2$ of users, wherein the users of the second subgroup $J_2$ have a better radio channel quality in the mobile communication system than the users of the first group $J_1$.

**13.** A base station transceiver (100) of a mobile communication system comprising the apparatus (10) of claim 1.

**14.** A method for selecting users from a group of users to be assigned to radio resources from a set of radio resources, a radio resource being used for communicating packet switched data between users and a mobile communication system, the method comprises
grouping (22) a plurality of subgroups of users from the group of users;
forming (24) a plurality of assignment sets, an assignment set comprising one radio resource from the set of radio resources and one user from each of the plurality of subgroups, the plurality of assignment sets comprising one assignment set for each combination of a radio resource from the set of radio resources with the users from the subgroups;

determining (26) a quality measure for each of the assignment sets, the quality measure of an assignment set comprising information on a communication quality achieved when using the radio resource of the assignment set for communicating packet switched data between the users of the assignment set and the mobile communication system; and

selecting (28) a subset of assignment sets from the plurality of assignments sets based on the quality measures, the subset of assignment sets comprising one assignment set for each of the set of radio resources.

15. A computer program having a program code for performing the method of claim 14, when the computer program is executed on a computer or processor.

**Patentansprüche**

1. Vorrichtung (10) zum Auswählen von Nutzern $j;k$ aus einer Gruppe von Nutzern $K$, denen Funkressourcen aus einem Satz von Funkressourcen $I$ zugeordnet werden sollen, wobei eine Funkressource $i$ für das übermitteln von paketvermittelten Daten zwischen Nutzern $j;k$ und einem mobilen Kommunikationssystem benutzt wird, wobei die Vorrichtung (10) umfasst:

Mittel zum Gruppieren (12) einer Vielzahl von Untergruppen $J_1;J_2$ von Nutzern aus der Gruppe von Nutzern $K$;
Mittel zum Bilden (14) einer Vielzahl von Zuordnungssätzen, wobei ein Zuordnungssatz eine Funkressource $i$ aus dem Satz von Funkressourcen $I$ und einen Nutzer $j;k$ aus einer jeden der Vielzahl von Untergruppen $J_1;J_2$ umfasst, wobei die Vielzahl von Zuordnungssätzen einen Zuordnungssatz für jede Kombination einer Funkressource $i$ aus dem Satz von Funkressourcen $I$ mit den Benutzern $j;k$ aus den Untergruppen $J_1;J_2$ umfasst;
Mittel zum Ermitteln (16) eines Qualitätsmaßes $c_{ijk}$ für einen jeden der Zuordnungssätze, wobei das Qualitätsmaß $c_{ijk}$ eines Zuordnungssatzes Informationen über eine Kommunikationsqualität, die erreicht wird, wenn die Funkressourcen $I$ des Zuordnungssatzes gemeinsam für die Übermittlung von paketvermittelten Daten zwischen den Nutzern $j;k$ des Zuordnungssatzes und dem mobilen Kommunikationssystem benutzt werden, umfasst; und
Mittel zum Auswählen (18) eines Tellsatzes von Zuordnungssätzen aus der Vielzahl von Zuordnungssätzen auf der Basis der Qualitätsmaße $c_{ijk}$, wobei der Tellsatz von Zuordnungssätzen einen Zuordnungssatz für jede Funkressource $I$ aus dem Satz von Funkressourcen $I$ umfasst.

2. Vorrichtung (10) nach Anspruch 1, wobei das Mittel zum Gruppieren (12) dazu ausgelegt ist, mindestens eine erste Untergruppe $J_1$ von Nutzern und eine zweite Gruppe von Nutzern $J_2$ zu gruppieren, und wobei das Mittel zum Bilden (14) dazu ausgelegt ist, einen Zuordnungssatz für jede Funkressource $i$ und ein beliebiges Paar von Nutzern $j;k$ aus der ersten Untergruppe $J_1$ und der zweiten Untergruppe $J_2$ von Nutzern zu bilden, wobei jedes Paar von Nutzern $j;k$ einen Nutzer $j$ aus der ersten Untergruppe $J_1$ und einen Nutzer $k$ aus der zweiten Untergruppe $J_2$ umfasst.

3. Vorrichtung (10) nach Anspruch 1, wobei das Mittel zum Auswählen (18) dazu ausgelegt ist, einen Teilsatz von Zuordnungssätzen auf der Basis einer Maximierung eines kumulierten Qualitätsmaßes basierend auf allen Funkressourcen $I \square I$ In dem Satz von Funkressourcen $I$ auszuwählen.

4. Vorrichtung (10) nach Anspruch 1, wobei die Funkressourcen $I$ Uplink-Funkressourcen für die übertragung von einem mobilen Sender-Empfänger (100) oder einem Nutzer $j;k$ an das mobile Kommunikationssystem entsprechen, oder wobei die Funkressourcen $i$ Downlink-Funkressourcen für die Übertragung von dem mobilen Kommunikationssystem an den mobilen Sender/Empfänger (100) oder den Nutzer $j;k$ entsprechen.

5. Vorrichtung (10) nach Anspruch 1, wobei das Mittel zum Ermitteln (16) des Qualitätsmaßes $c_{ijk}$ für einen jeden der Zuordnungssätze dazu ausgelegt ist, das Qualitätsmaß $c_{ijk}$ durch Evaluieren eines einzelnen Qualitätsmaßes für jeden Nutzer in dem Zuordnungssatz auf der Basis einer gemeinsamen Benutzung der Funkressource $i$ durch alle Nutzer $j;k$ aus dem Zuordnungssatz und einer Interferenzminderungstechnik zwischen den Nutzern $j;k$ des Zuordnungssetzes zu ermitteln,

6. Vorrichtung (10) nach Anspruch 1, wobei das Qualitätsmaß $c_{ijk}$ einer von den Nutzern $j;k$ eines Zuordnungssatzes bei gemeinsamer Benutzung der Funkressource $i$ des Zuordnungssatzes erreichten kumulierten Datenrate entspricht.

**7.** Vorrichtung (10) nach Anspruch 1, wobei die Gruppe von Nutzern $J$ den Nutzern eines Basisstations-Sender/Empfängers (100) des mobilen Kommunikationssystem entspricht, und wobei jede Untergruppe $J_1;J_2$ dieselbe Anzahl von Nutzern aufweist, und wobei der Satz von Funkressourcen $I$ dieselbe Anzahl von Funkressourcen wie die Anzahl von Nutzern in einer Untergruppe $J_1;J_2$ aufweist.

**8.** Vorrichtung (10) nach Anspruch 7, wobei die Gruppe von Nutzern $J$ $J = \{0, ..., K\text{-}1\}$ mit $K$ Nutzern entspricht, und wobei der Satz von Funkressourcen $I$ $I = \{0, ..., N\text{-}1\}$ mit $N$ Funkressourcen entspricht, wobei das Mittel zum Gruppieren (12) dazu ausgelegt ist, eine erste Untergruppe $J_1$ von Nutzern und eine identische zweite Untergruppe $J_2$ von Nutzern zu gruppieren, und wobei das Mittel zum Bilden (14) der Zuordnungssätze dazu ausgelegt ist, einen Satz von $N$ Dreiergruppen $i, j, k,$ wobei $I \in I, j \in J_1$ und $k \in J_2$ als die Vielzahl von Zuordnungssätzen zu bilden, wobei das Mittel zum Ermitteln (16) dazu ausgelegt Ist, eine Summe von positiven Koeffizienten $c_{ijk}$, welche einer jeden der Dreiergruppen als ein Qualitätsmaß $c_{ijk}$ zugeordnet sind, zu ermitteln, und wobei das Mittel zum Auswählen (18) dazu ausgelegt Ist, ein Drel-indices-Zuordnungsproblem derart zu lösen, dass sich jede Funkressource $i \in I$ genau In einem der Zuordnungssätze befindet, wobei der Tellsatz von Zuordnungssätzen auf der Basis der Suche nach

$$\arg\max_{x_{ijk}} \sum_{i=0}^{N-1}\sum_{j=0}^{K_1-1}\sum_{k=0}^{K_2-1} c_{ijk}\, x_{ijk} \ ,$$

subject so

$$\sum_{j=0}^{K_1-1}\sum_{k=0}^{K_2-1} x_{ijk} = 1, \ \forall \ i \in I,$$

$$\sum_{i=0}^{N-1}\sum_{k=0}^{K_2-1} x_{ijk} = 1, \ \forall \ j \in J_1,$$

$$\sum_{i=0}^{N-1}\sum_{j=0}^{K_1-1} x_{ijk} = 1, \ \forall \ k \in J_2.$$

ausgewählt wird.

**9.** Vorrichtung (10) nach Anspruch 8, wobei das Mittel zum Auswählen (18) weiterhin dazu ausgelegt ist, das axiale Drei-Indices-Zuordnungsproblem durch Lösen eines ganzzahligen linearen Programmierungsproblems zu lösen, durch Definieren von $NK_1K_2$ Variablen

$$\xi_{i+Nj+NK_1k} = x_{ijk} \quad \text{for } i \in I, j \in J_1, k \in J_2,$$

und Koeffizienten $\alpha_{v,\mu_t}$ wobei $v = 0,..., N + K_1 + {}_{K2} - 1$ und $\mu = 0,...,NK_1K_2 -1$, mit den folgenden $N + K1 + K2$ Beschränkungen
für alle $v \in I$

$$\alpha_{v,j+Nj+NK_1k} = \begin{cases} 1 & \text{for } i = v, \ j \in J_1, \ k \in J_2 \\ 0 & \text{else} \end{cases},$$

für alle $v \in J_1$

$$\alpha_{N+v,j+Nj+NK_1k} = \begin{cases} 1 & \text{for } i \in I, \ j = v, \ k \in J_2 \\ 0 & \text{else} \end{cases},$$

für alle $v \in J_2$

$$\alpha_{N+K_1+v,j+Nj+NK_1k} = \begin{cases} 1 & \text{for } i \in I, \ j \in J_1, \ k = v \\ 0 & \text{else} \end{cases},$$

zusätzlich definierten Koeffizienten $\gamma_i$ als

$$\gamma_{i+Nj+NK_1k} = c_{ijk} \quad \text{for } i \in I, \ j \in J_1, \ k \in J_2,$$

und Lösen des Optimierungsproblems als

$$\arg \max_{\xi_i,\, i \in \{0,...,NK_1K_2-1\}} \sum_{i=0}^{NK_1K_2-1} \gamma_i \xi_i,$$

with the constraints

$$\sum_{v=0}^{NK_1K_2-1} \alpha_{i,v} \xi_v = 1, \ \forall \ i \in I,$$

$$\sum_{v=0}^{NK_1K_2-1} \alpha_{N+j,v} \xi_v = 1, \ \forall \ j \in J_1,$$

$$\sum_{v=0}^{NK_1K_2-1} \alpha_{N+K_1+k,v} \xi_v = 1, \ \forall \ k \in J_2,$$

$$\xi_v \in \{0,1\} \quad \forall \ v \in \{0,...,NK_1K_2-1\}.$$

**10.** Vorrichtung (10) nach Anspruch 9, wobei das Mittel zum Auswählen (18) weiterhin dazu ausgelegt Ist, die Koeffizienten $c_{ijk}$ ausgehend von den Kanalzuständen der Nutzer $j;k$ unter Berücksichtigung eines Interferenzzustands zwischen den Nutzern des entsprechenden Zuordnungssatzes zu berechnen, die Koeffizienten $c_{ijk}$ in Koeffizienten $\xi_i$ umzuwandeln, $\xi_i$ durch Lösen des Optimierungsproblems zu berechnen und die $\xi_i$ in $x_{ijk}$ umzuwandeln, nach Indices von $x_{ijk}$ mit Nichtnullwert zu suchen, und/oder wobei das Mittel zum Auswählen (18) dazu ausgelegt ist, das ganzzahlige lineare Programmierungsproblem in ein lineares Programmierungsproblem mit der Beschränkung von

$$0 \leq \xi_v \leq 1, \; \xi_v \in R \quad \forall v \in \{0, ..., NK_1K_2 - 1\}.$$

zu konvertieren.

11. Vorrichtung (10) nach Anspruch 10, wobei das Mittel zum Auswählen (18) dazu ausgelegt Ist, das lineare Programmierungsproblem durch eine Innere-Punkt-Methode zu lösen und zu prüfen, ob

$$\xi_v \in \{0,1\} \quad \forall v \in \{0, ..., NK_1K_2 - 1\},$$

und wenn nicht, das lineare Programmierungsprogramm anhand eines Simplex-Verfahrens zu lösen und zu prüfen, ob

$$\xi_v \in \{0,1\} \quad \forall v \in \{0, ..., NK_1K_2 - 1\},$$

und wenn nicht, das ganzzahlige lineare Programmierungsprogramm weiterhin zu lösen, um

$$\xi_v \in \{0,1\} \quad \forall v \in \{0, ..., NK_1K_2 - 1\}$$

zu finden.

12. Vorrichtung (10) nach Anspruch 1, wobei das Mittel zum Gruppieren (12) dazu ausgelegt ist, mindestens eine erste Untergruppe $J_1$ von Nutzern und eine zweite Untergruppe $J_2$ von Nutzern zu gruppieren, wobei die Nutzer der zweiten Untergruppe $J_2$ eine bessere Funkkanalqualität in dem mobilen Kommunikationssystem aufweisen als die Nutzer der ersten Gruppe $J_1$.

13. Basisstations-Emfänger/Sender (100) eines mobilen Kommunikationssystems mit einer Voirrichtung (10) nach Anspruch 1.

14. Verfahren zum Auswählen von Nutzern aus einer Gruppe von Nutzern, denen Funkressourcen aus einem Satz von Funkressourcen zugeordnet werden sollen, wobei eine Funkressource für das Übermitteln von paketvermittelten Daten zwischen Nutzern und einem mobilen Kommunikationssystem benutzt wird, wobei das Verfahren umfasst:

Gruppieren (22) einer Vielzahl von Untergruppen von Nutzern aus der Gruppe von Nutzern;
Bilden (24) einer Vielzahl von Zuordnungssätzen, wobei ein Zuordnungssatz eine Funkressource aus dem Satz von Funkressourcen und einen Nutzer aus einer jeden der Vielzahl von Untergruppen umfasst, wobei die Vielzahl von Zuordnungssätzen einen Zuordnungssatz für jede Kombination einer Funkressource aus dem Satz von Funkressourcen mit den Benutzern aus den Untergruppen umfasst;
Ermitteln (26) eines Qualitätsmaßes für einen jeden der Zuordnungssätze, wobei das Qualitätsmaß eines Zuordnungssatzes Informationen über eine Kommunikationsqualität, die erreicht wird, wenn die Funkressourcen des Zuordnungssatzes gemeinsam für die Übermittlung von paketvermittelten Daten zwischen den Nutzern des Zuordnungssatzes und dem mobilen Kommunikationssystem benutzt werden, umfasst; und
Auswählen (28) eines Teilsatzes von Zuordnungssätzen aus der Vielzahl von Zuordnungssätzen auf der Basis der Qualitätsmaße, wobei der Teilsatz von Zuordnungssätzen einen Zuordnungssatz für jede Funkressource aus dem Satz von Funkressourcen umfasst.

15. Computerprogramm mit einem Programmcode zum Durchführen des Verfahrens nach Anspruch 14, wenn das Computerprogramm auf einem Computer oder einem Prozessor ausgeführt wird.

**Revendications**

1. Appareil (10) pour sélectionner des utilisateurs $j;k$ à partir d'un groupe d'utilisateurs $K$ devant être attribués à des ressources radio parmi un ensemble de ressources radio $I$, une ressource radio $i$ étant utilisée pour communiquer des données à commutation de paquets entre des utilisateurs $j;k$ et un système de communication mobile, l'appareil (10) comprenant

   des moyens pour regrouper (12) une pluralité de sous-groupes $J_1;J_2$ d'utilisateurs parmi le groupe d'utilisateurs $K$;

   des moyens pour former (14) une pluralité d'ensembles d'attributions, un ensemble d'attributions comprenant une ressource radio $i$ parmi l'ensemble de ressources radio $I$ et un utilisateur $j;k$ parmi chaque sous-groupe de la pluralité de sous-groupes $J_1;J_2$, la pluralité d'ensembles d'attributions comprenant un ensemble d'attributions pour chaque combinaison d'une ressource radio $i$ parmi l'ensemble de ressources radio $I$ avec les utilisateurs $j;k$ parmi les sous-groupes $J_1;J_2$;

   des moyens pour déterminer (16) une mesure de qualité $c_{ijk}$ pour chacun des ensembles d'attributions, la mesure de qualité $c_{ijk}$ d'un ensemble d'attributions comprenant des informations sur une qualité de communication obtenue lors de l'utilisation conjointe de la ressource radio $i$ de l'ensemble d'attributions pour communiquer des données à commutation de paquets entre les utilisateurs $j;k$ de l'ensemble d'attributions et le système de communication mobile ; et

   des moyens pour sélectionner (18) un sous-ensemble d'ensembles d'attributions parmi la pluralité d'ensembles d'attributions sur la base des mesures de qualité $c_{ijk}$, le sous-ensemble d'ensembles d'attributions comprenant un ensemble d'attributions pour chaque ressource radio $i$ parmi l'ensemble de ressources radio $I$.

2. Appareil (10) selon la revendication 1, dans lequel les moyens pour regrouper (12) sont adaptés pour regrouper au moins un sous-groupe $J_1$ d'utilisateurs et un deuxième groupe d'utilisateurs $J_2$ et dans lequel les moyens pour former (14) sont adaptés pour former un ensemble d'attributions pour chaque ressource radio $i$ et toute paire d'utilisateurs $j;k$ parmi le premier sous-groupe $J_1$ et le deuxième sous-groupe $J_2$ d'utilisateurs, chaque paire d'utilisateurs $J;k$ comprenant un utilisateur $j$ parmi le premier sous-groupe $J_1$ et un utilisateur $k$ parmi le deuxième sous-groupe $J_2$.

3. Appareil (10) selon la revendication 1, dans lequel les moyens pour sélectionner (18) sont adaptés pour sélectionner le sous-ensemble d'ensembles d'attributions sur la base d'une maximisation d'une mesure de qualité cumulée sur la base de toutes les ressources radio $l \in I$ dans l'ensemble de ressources radio $I$.

4. Appareil (10) selon la revendication 1, dans lequel les ressources radio $i$ correspondent à des ressources radio de liaison montante pour une transmission entre un émetteur/récepteur mobile (100) ou un utilisateur $j;k$ et le système de communication mobile ou dans lequel les ressources radio $i$ correspondent à des ressources radio de liaison descendante pour une transmission entre le système de communication mobile et l'émetteur/récepteur mobile (100) ou *l'utilisateur J;k.*

5. Appareil (10) selon la revendication 1, dans lequel les moyens pour déterminer (16) la mesure de qualité $c_{ijk}$ pour chacun des ensembles d'attributions sont adaptés pour déterminer la mesure de qualité $c_{ijk}$ en évaluant une mesure de qualité individuelle de chaque utilisateur dans l'ensemble d'attributions sur la base d'une utilisation conjointe de la ressource radio $i$ par tous les utilisateurs $j;k$ de l'ensemble d'attributions et d'une technique de réduction des Interférences entre les utilisateurs $j;k$ de l'ensemble d'attributions.

6. Appareil (10) selon la revendication 1, dans lequel la qualité de mesure $c_{ijk}$ correspond à un débit de données cumulé obtenu par les utilisateurs $J;k$ d'un ensemble d'attributions lors de l'utilisation conjointe de la ressource radio $i$ de l'ensemble d'attributions.

7. Appareil (10) selon la revendication 1, dans lequel le groupe d'utilisateurs $J$ correspond aux utilisateurs d'un émetteur/récepteur de station de base (100) du système de communication mobile et dans lequel chaque sous-groupe $J_1;J_2$ a le même nombre d'utilisateurs et dans lequel l'ensemble de ressources radio $I$ a autant de ressources radio qu'il y a d'utilisateurs dans un sous-groupe $J_1;J_2$.

8. Appareil (10) selon la revendication 7, dans lequel le groupe d'utilisateurs $J$ correspond à $J = \{0_1.., K\text{-}1\}$ ayant $K$ utilisateurs et dans lequel l'ensemble de ressources radio correspond à $I = \{0,...., N\text{-}1\}$ ayant $N$ ressources radio, dans lequel les moyens pour regrouper (12) sont adaptés pour regrouper un premier sous-groupe $J_1$ d'utilisateurs et un deuxième sous-groupe identique $J_2$ d'utilisateurs, et dans lequel les moyens pour former (14) les ensembles d'attributions sont adaptés pour former un ensemble de $N$ triplets $i,j,\ k$ avec $i \in I, j \in J_1$ et k e $J_2$ en tant que pluralité d'ensembles d'attributions, dans lequel les moyens pour déterminer (16) sont adaptés pour déterminer une somme de coefiicients positifs $c_{ijk}$ attribuée à chacun des triplets en tant que mesure de qualité $c_{ijk}$, et dans lequel les moyens pour sélectionner (18) sont adaptés pour résoudre un problème d'attribution de trois indices de telle sorte que chaque ressource radio $i \in I$ soit exactement dans un des ensembles d'attributions, le sous-ensemble d'ensembles d'attributions étant sélectionné sur la base de la recherche de

$$\arg\max_{x_{ijk}} \sum_{i=0}^{N-1} \sum_{j=0}^{K_1-1} \sum_{k=0}^{K_2-1} c_{ijk} x_{ijk} \ ,$$

soumis à

$$\sum_{j=0}^{K_1-1} \sum_{k=0}^{K_2-1} x_{ijk} = 1, \ \forall \ i \in I,$$

$$\sum_{i=0}^{N-1} \sum_{k=0}^{K_2-1} x_{ijk} = 1, \ \forall \ j \in J_1,$$

$$\sum_{i=0}^{N-1} \sum_{j=0}^{K_1-1} x_{ijk} = 1, \ \forall \ k \in J_2.$$

**9.** Appareil (10) selon la revendication 8, dans lequel les moyens pour sélectionner (18) sont en outre adaptés pour résoudre le problème axial d'attribution de trois Indices en résolvant un problème de programmation linéaire par nombres entiers en définissant des variables $NK_1K_2$

$$\xi_{i+Nj+NK_1k} = x_{ijk} \ \text{pour} \ \ i \in I, j \in J_1, k \in J_2,$$

et des coefficients $\alpha_{v,\mu}$, avec $v = 0,..., N + K_1 + K_2 - 1$ et $\mu = 0,..., NK_1K_2 - 1$ avec les contraintes $N+K_1+K_2$ suivantes pour tous les $v \in I$

$$\alpha_{v,i+Nj+NK_1k} = \begin{cases} 1 & \text{pour} \ \ i = v, \ j \in J_1, \ k \in J_2 \\ 0 & \text{ou} \end{cases},$$

pour tous les $v \in J_1$

$$\alpha_{N+v,i+Nj+NK_1k} = \begin{cases} 1 & \text{pour} \ \ i \in I, \ j = v, \ k \in J_2 \\ 0 & \text{ou} \end{cases},$$

pour tous les $v \in J_2$

$$\alpha_{N+K_1+v,j+Nj+NK_1k} = \begin{cases} 1 & \text{pour} \quad i \in I, \ j \in J_1, \ k = v \\ 0 & \text{ou} \end{cases},$$

des coefficients $y_i$ définis en outre ainsi

$$\gamma_{i+Nj+NK_1k} = c_{ijk} \quad \text{pour} \quad i \in I, \ j \in J_1, \ k \in J_2,$$

et résoudre le problème d'optimisation ainsi

$$\arg \max_{\xi_i, i \in \{0,...,NK_1K_2-1\}} \sum_{i=0}^{NK_1K_2-1} \gamma_i \xi_i,$$

avec les contraintes

$$\sum_{v=0}^{NK_1K_2-1} \alpha_{i,v} \xi_v = 1, \ \forall \ i \in I,$$

$$\sum_{v=0}^{NK_1K_2-1} \alpha_{N+j,v} \xi_v = 1, \ \forall \ j \in J_1,$$

$$\sum_{v=0}^{NK_1K_2-1} \alpha_{N+K_1+k,v} \xi_v = 1, \ \forall \ k \in J_2,$$

$$\xi_v \in \{0,1\} \quad \forall \ v \in \{0,...,NK_1K_2-1\}.$$

10. Appareil (10) selon la revendication 9, dans lequel les moyens pour sélectionner (18) sont en outre adaptés pour calculer les coefficients $c_{ijk}$ à partir d'états de canal des utilisateurs $j;k$ en tenant compte d'une condition d'interférence entre les utilisateurs de l'ensemble d'attributions respectif, transformer les coefficients $c_{ijk}$ en coefficients $\xi_i$, calculer $\xi_i$ en résolvant le problème d'optimisation et transformer le $\xi_i$ $x_{ijk}$, rechercher des indices de $x_{ijk}$ de valeur non-nulle, sélectionner le sous-ensemble des ensembles d'attributions sur la base des Indices de $x_{ijk}$ de valeur non-nulle, et/ou dans lequel les moyens pour sélectionner (18) sont adaptés pour convertir le problème de programmation linéaire par nombres entiers en un problème de programmation linéaire avec la contrainte de $0 \leq \xi_v \leq 1$, $\xi_v \in R \ \forall \ v \in \{0,..., NK_1K_2 -1\}$.

11. Appareil (10) selon la revendication 10, dans lequel les moyens pour sélectionner (18) sont adaptés pour résoudre le problème de programmation linéaire par une méthode du point intérieur et pour vérifier si $\xi_v \in \{0,1\} \ \forall \ v \in \{0,..., NK_1K_2 -1\}$ et si tel n'est pas le cas, pour résoudre le problème de programmation linéaire par une méthode du simplexe et pour vérifier si $\xi_v \in \{0, 1\} \ \forall \ v \in \{0,..., NK_1K_2 -1\}$ et si tel n'est pas le cas, pour résoudre en outre le problème de programmation linéaire par nombres entiers pour trouver $\xi_v \in \{0,1\} \ \forall \ v \in \{0,..., NK_1K_2-1\}$.

12. Appareil (10) selon la revendication 1, dans lequel les moyens pour regrouper (12) sont adaptés pour regrouper au moins un premier sous-groupe $J_1$ d'utilisateurs et un deuxième sous-groupe $J_2$ d'utilisateurs, dans lequel les utilisateurs du deuxième sous-groupe $J_2$ ont une meilleure qualité de canal radio dans le système de communication mobile que les utilisateurs du premier groupe $J_1$.

13. Émetteur/récepteur de station de base (100) d'un système de communication mobile comprenant l'appareil (10) selon la revendication 1.

14. Procédé pour sélectionner des utilisateurs à partir d'un groupe d'utilisateurs devant être attribués à des ressources radio parmi un ensemble de ressources radio, une ressource radio étant utilisée pour communiquer des données à commutation de paquets entre des utilisateurs et un système de communication mobile, le procédé comprenant les étapes suivantes

regrouper (22) une pluralité de sous-groupes d'utilisateurs parmi le groupe d'utilisateurs ;
former (24) une pluralité d'ensembles d'attributions, un ensemble d'attributions comprenant une ressource radio parmi l'ensemble de ressources radio et un utilisateur parmi chaque sous-groupe de la pluralité de sous-groupes, la pluralité d'ensembles d'attributions comprenant un ensemble d'attributions pour chaque combinaison d'une ressource radio parmi l'ensemble de ressources radio avec les utilisateurs parmi les sous-groupes ;
déterminer (26) une mesure de qualité pour chacun des ensembles d'attributions, la mesure de qualité d'un ensembles d'attributions comprenant des informations sur une qualité de communication obtenue lors de l'utilisation de la ressource radio de l'ensemble d'attributions pour communiquer des données à commutation de paquets entre les utilisateurs de l'ensemble d'attributions et le système de communication mobile ; et
sélectionner (28) un sous-ensemble d'ensembles d'attributions parmi la pluralité d'ensembles d'attributions sur la base des mesures de qualité, le sous-ensemble d'ensembles d'attributions comprenant un ensemble d'attributions pour chaque ressource radio parmi l'ensemble de ressources radio.

15. Programme informatique possédant un code de programme pour exécuter le procédé selon la revendication 14, lorsque le programme informatique est exécuté sur un ordinateur ou un processeur.

Fig. 1

Fig. 2

| Grouping $_{/}22$ | | Forming $_{/}24$ | | Determining $_{/}26$ | | Selecting $_{/}28$ |
|---|---|---|---|---|---|---|

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2037693 A

### Non-patent literature cited in the description

- **J. SCHAEPPERLE.** Throughput of a wireless cell using superposition based multiple-access with optimized scheduling. *Personal Indoor and Mobile Radio Communications (PIMRC), 2010, IEEE 21st International Symposium,* 2010
- Novel techniques to improve downlink multiple access capacity for Beyond 3G. **SHIDONG ZHOU et al.** IEEE Communications Magazine. IEEE Service Center, January 2005, vol. 43
- **HAN Z. et al.** Fair Multiuser Channel Allocation for OFDMA Networks Using Nash Bargaining Solutions and Coalitions. *IEEE TRANSACTIONS ON COMMUNICATIONS,* August 2005, vol. 53 (8
- **CHRISTOS H. PAPADIMTRIOU ; KENNETH STEIGLITZ.** Combinatorial Optimization: Algorithms and Complexity. Dover, 1998
- **ALEXANDER SCHRIJVER.** Theory of Linear and Integer Programming. John Wiley and Sons, 1987
- **GEORGE L. NEMHAUSER ; LAURENCE A. WOLSEY.** Integer and Combinatorial Optimization. John Wiley & Sons, 1988
- Gnu Linear Programming Toolkit (GLPK. *Reference Manual for GLPK,* December 2010, www ng-nu.org/s/pk/
- **STEPHEN WRIGHT.** *Primal-Dual Interior-Point Methods,* 2007
- **STEPHEN BOYD ; LIEVEN VANDENBERGHE.** Convex Optimization. 2004